## Europäisches Patentamt
## European Patent Office
## Office européen des brevets

(19)

(11) Veröffentlichungsnummer: **0 183 986**
**B1**

(12) **EUROPÄISCHE PATENTSCHRIFT**

(45) Veröffentlichungstag der Patentschrift:
06.04.88

(51) Int. Cl.⁴: **A 22 C 21/00,** A 22 C 25/16

(21) Anmeldenummer: **85113789.3**

(22) Anmeldetag: **29.10.85**

(54) Verfahren zum Gewinnen des Fleisches von Geflügel und Vorrichtung zur Durchführung des Verfahrens.

(30) Priorität: **06.12.84 DE 3444430**

(43) Veröffentlichungstag der Anmeldung:
**11.06.86 Patentblatt 86/24**

(45) Bekanntmachung des Hinweises auf die Patenterteilung:
**06.04.88 Patentblatt 88/14**

(84) Benannte Vertragsstaaten:
**BE DE FR GB IT LU NL SE**

(56) Entgegenhaltungen:
EP-A-0 118 963
DE-A-3 040 373
FR-A-2 270 799
GB-A-404 388
GB-A-2 089 642
US-A-4 373 232
US-A-4 484 375

(73) Patentinhaber: **NORDISCHER MASCHINENBAU RUD. BAADER GMBH + CO KG,** Geniner Strasse 249, D-2400 Lübeck (DE)

(72) Erfinder: **Bartels, Alfred,** Buchenweg 5, D-2400 Lübeck (DE)

LIBER, STOCKHOLM 1988

## Beschreibung

Die Erfindung betrifft ein Verfahren zum Gewinnen des Fleisches von den Körpern geschlachteten Geflügels in stückiger Form, vorzugsweise in Form von Filets, durch mechanisches Ablösen in aufeinanderfolgenden, im Bereich des Brustbeines (sterum) beginnenden Arbeitsschritten, sowie eine Vorrichtung zur Durchführung des Verfahrens nach Anspruch 1., mit einer Reihe von paarweise angeordneten Trennwerkzeugen zum Abtrennen des Fleisches von dem Brustbein und den Rippen, und einem angetriebenen Förderer mit Sätteln, welche die von ihren Gliedmaßen befreiten Geflügelkörper Brustbein-oben unter Abstützung an dessen Innenseite aufnehmen und an den Trennwerkzeugen vorbeiführen.

Aus dem DE-GM 72 30 731 ist eine Vorrichtung bekannt, bei welcher ein Förderer mit Sätteln zur Aufnahme von zu bearbeitenden Tierkörpern in ihrer Bauchhöhle Verwendung findet. Jeder Tierkörper wird so der Bearbeitung zur Erzeugung von Fleischfilets zugeführt, welches Produkt dadurch erzielt wird, daß zunächst mittels eines Paares von Kreismessern Einschnitte in der Symmetrieebene des Tierkörpers erzeugt werden, von welchen aus dann mittels eines Paares von Schabewerkzeugen die Filets von den die Bauchhöhle umschließenden Rippen abgeschabt werden. Diese Vorrichtung wird für die Bearbeitung von Fischen eingesetzt.

Eine entsprechend den demgegenüber bestehenden Unterschieden in dem Bau des Geflügelkörpers angepaßte Vorrichtung zum Gewinnen des Brustfleisches ist aus der EP 118 963 zu entnehmen. Bei dieser Vorrichtung werden von ihren Gliedmaßen befreite und durch Entfernen des Rückgrats geöffnete Geflügelkörper auf Sätteln einer angetriebenen Tragscheibe in ihrer Bauchhöhle aufgesattelt und zunächst mittels eines Paares von Kreismessern mit Einschnitten in der Symmetrieebene des Körpers versehen, um die Fleischfilets von dem Kamm des Brustbeines zu lösen. Von diesen Einschnitten ausgehend werden dann mittels Paaren von Schabewerkzeugen die Filets von den die Bauchhöhle umschließenden Rippen teilweise abgeschabt und mittels eines dann folgenden fräserähnlichen Walzenpaares vollständig abgetrennt.

Diese Vorgehensweise ergibt Filets mit sehr rauher Innenfläche, was insbesondere bei der Feilhaltung als Frischware als die Qualität beeinträchtigendes Merkmal gewertet wird.

Die Vorliegende Erfindung ist daher darauf gerichtet, diesen Mangel zu beheben und gründet auf der Erkenntnis, daß den Filetierprozeß behindernde anatomische Gegebenheit einer speziellen Bearbeitung unterzogen werden müssen, bevor die Filets von den Rippen abgelöst werden. Es ist weiter Aufgabe der Erfindung, diese spezielle Bearbeitung als Arbeitsschritt in den Filetierprozeß einzubeziehen, so daß in üblicher Weise vorbereitete Geflügelkörper verarbeitbar sind.

Diese Aufgaben werden erfindungsgemäß durch ein Verfahren gelöst, welches dadurch gekennzeichnet ist, daß mit dem Ablösen des Fleisches von dem Brustbein die Äste des Gabelbeines (claviculae bzw. furcula) getrennt werden, daß die so erzeugten, mit den Körpergelenken der Flügel-oder Oberarmknochen (humerus) verbundenen Teile des Gabelbeines unter Verdrängen derselben zu der Symmetrieebene des Geflügelkörpers hin aus dem Fleisch herausgeschält werden, und daß dann das völlige Abtrennen des Fleisches von dem Geflügelkörper unter Verdrängen der Körpergelenke der Oberarmknochen zu der Symmetrieebene des Geflügelkörpers hin erfolgt.

Zur Durchführung dieses Verfahrens ist eine Vorrichtung vorgesehen, welche dadurch gekennzeichnet ist, daß auf die Trennwerkzeuge zum Ablösen des Fleisches von dem Brustbein ein Schneidwerkzeug folgt, welches aus einem Paar zu beiden Seiten der Umlaufebene der Sättel angeordneter Kreismesser besteht, welche bezüglich ihres Abstandes zueinander synchron zu der Stellung der Sättel und symmetrisch zu deren Umlaufebene steuerbar sind und mit ihren Schneiden bis in die Nähe der durch die Stützflächen der Sättel bestimmten Förderbahn reichen, und daß als letztes Werkzeug zum Abtrennen des Fleisches von den Rippen ein Paar dachförmig zueinandergestellter und angetriebener Kreismesser vorgesehen ist, welche ebenfalls bezüglich ihres Abstandes zueinander synchron zu der Stellung der Sättel und symmetrisch zu deren Umlaufebene steuerbar sind und mit ihren Schneiden im Bereich neben den Flanken der Sättel wirksam sind.

Die damit erzielbaren Vorteile bestehen insbesondere darin, daß die das Fleisch im vorderen Teil des Skelettes festhaltenden Skeletteile freigeschält und derart verdrängt werden, daß eine Ablösung der Filets von den Rippen durch in einer Ebene geführte Filetierschnitte möglich ist.

Nach einer Ausgestaltung der Erfindung ist vorgesehen, daß den Kreismessern zum endgültigen Abtrennen der Filets ein Paar gegeneinander gegen die Kraft von Federn beweglicher Führungen vor- und zugeordnet ist, welche in den Ebenen der einander zugekehrten Innenflächen der Kreismesser und sich bis in deren Bereich erstreckend vorgesehen sind, und welche den Geflügelkörper im wesentlichen in dem Bereich des zwischen dem Rückgrat und den Hakenfortsätzen befindlichen Teils der Rippen bzw. des darauf aufliegenden Fleisches abgedeckt halten und als Schnittgegenlage für die Kreismesser wirksam sind.

Damit wird erreicht, daß die im Bereich des Rückens des Geflügelkörpers befindlichen Fleischteile geringer Dicke an dem Skelett belassen bleiben, so daß das gewonnene Filet mit sauberer Kontur anfällt.

Dabei hat sich als diesen Arbeitsgang erleichternd gezeigt, wenn jedes Kreismesser an seiner Innenfläche eine Ausdrehung aufweist und wenn die Kreismesser in bezug auf die Förderebene der Sättel geschränkt angeordnet sind.

Zwecks genauer Positionierung und sicherer Halterung des zu bearbeitenden Geflügelkörpers auf dem Sattel ist jeder derselben mit einer Anschlagfahne versehen, in deren Nähe dahinter ein Haltestift zur Verankerung des Geflügelkörpers auf dem Satel angeordnet ist. Gleichzeitig wird damit eine gewisse Selbstreinigung der Vorrichtung dadurch erzielt, daß die Anschlagfahne zwischen den Führungen und Werkzeugen hindurchläuft.

Die Halterung des Geflügelkörpers erfolgt dadurch, daß der Haltestift in dem Stützklotz des Sattels gegen die Bewegungsrichtung desselben ansteigend geführt ist und kurz vor dem Wirkbereich des Trennwerkzeuges aus der Stützfläche des Sattels austretend schlagartig in den Geflügelkörper eingesteuert wird. Um das freigeschälte Skelett zwecks Gewinnung des noch an diesem insbesondere zwischen den Rippen anhaftende Restfleisches in einem Separatorprozeß problemloser handhaben zu können, kann dem letzten Werkzeug ein Trennwerkzeug zum Trennen des von den Filets befreiten Geflügelkörpers zu beiden Seiten des Brustbeines nachgeschaltet sein.

Ein Ausführungsbeispiel der erfindungsgemäßen Vorrichtung wird nachfolgend anhand der Zeichnung näher erläutert.

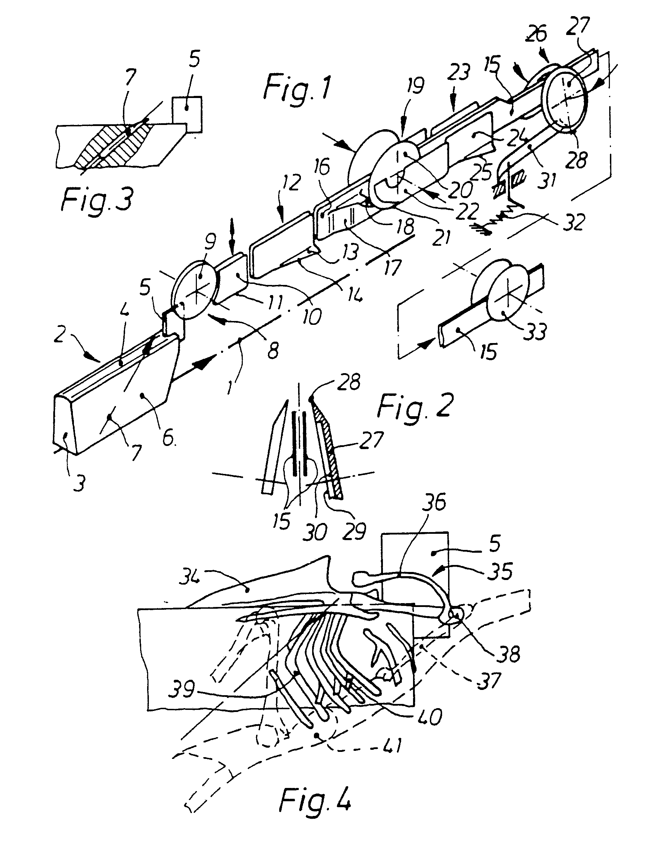

Es zeigt Fig. 1 eine Ansicht der Gesamtmaschine, axonometrisch und vereinfacht dargestellt.

Fig. 2 einen Teilquerschnitt im Bereich des letzten, mit dachförmig gestellten Messern ausgestatteten Werkzeuges,

Fig. 3 einen Teillängsschnitt durch den Sattel

Fig. 4 das Skelett eines für die Bearbeitung in der erfindungsgemäßen Vorrichtung vorbereiteten Geflügelkörpers, aufgesattelt auf einem der Sättel des Förderers,

In einem nicht näher dargestellten Gestell einer Vorrichtung zum Gewinnen des Fleisches von den Körpern geschlachteten Geflügels ist ein auf geeignete Weise endlos umlaufend angetriebener Förderer 1 angeordnet, welcher mit in gleichem Abstand zueinander stehenden Sätteln 2 für die Aufnahme der zu bearbeitenden Geflügelkörper bestückt ist. Jeder Sattel 2 besteht aus einem Stützklotz 3 mit einer den anatomischen Gegebenheiten angepaßten Stützfläche 4, aus welcher an dessen vorauslaufendem Ende eine schmale Anschlagfahne 5 aufragt. Jeder Stützklotz 3 weist parallel zu seiner Bewegungsrichtung verlaufende Flanken 6 auf, welche unter schlankem Winkel dachförmig geneigt zueinander verlaufen. In dem Stützklotz 3 ist gemäß Fig. 3 ein gegen die Bewegungsrichtung desselben geneigt aus der Stützfläche 4 aussteuerbarer Haltestift 7 angeordnet, welcher in dem Beschickbereich der Vorrichtung zurückgezogen gehalten und unmittelbar vor dem Eintritt des Sattels 2 in den Arbeitsbereich der Vorrichtung auf geeignete Weise in Eingriff mit dem Skelett gesteuert wird.

Oberhalb der durch die Stützflächen 4 der Sättel 2 bestimmten Förderbahn befinden sich die Führungen und Bearbeitungswerkzeuge. Diese bestehen der Reihe nach aus einem nicht gezeigten Paar geeigneter Einführungen zum Ausrichten des zu bearbeitenden Geflügelkörpers, denen ein Trennwerkzeug 8 mit einem Paar Kreismessern 9 zum Einschneiden zu beiden Seiten des kammartigen Steges des Brustbeines 34 folgt. Diesen schließt sich ein Paar gegen Federkraft verdrängbarer und in die Einschnitte eingreifender Führungen 10 an, deren Unterkanten als Schneiden 11 ausgebildet sind, welche sich zu ihrem Ende hin zunehmend absenken. Die Führungen 10 leiten über zu einem Trennwerkzeug 12 aus einem Paar Schabemesser 13 mit pflugartig divergierenden, ebenfalls zu der Förderbahn der Sättel 2 absenkend verlaufenden Schneiden 14 , welcher Verlauf durch leicht dachförmige Stellung der Messerklingen zueinander erreicht wird. Den Schabemessern 13 schließt sich ein Paar, sich durch die weiteren Arbeitsstationen erstreckender Führungen 15 an, zwischen welchen der kammartige Steg des Brustbeines 34 geführt bleibt.

Sie sind im Bereich ihres Eintrittsendes 16 mit einem Paar Abweiser 17 zur Verdrängung des freigeschnittenen Fleisches von dem Brustbein 34 weg versehen. Dabei trägt jeder Abweiser 17 in seinem oberen Bereich ein gleichzeitig nach unten drängendes, kufenartiges Führungstell 18 zum Niederhalten der durch das Trennwerkzeug 8 mitgetrennten Äste 36 des Gabelbeines 35. Das Paar Abweiser 17 bildet die Schnittgegenlagen für ein Paar angetriebener Kreismesser 20 eines Schneidwerkzeuges 19. Die Kreismesser 20 sind auf geeignete Weise während ihrer Arbeitsphase in Abhängigkeit von der Stellung des jeweiligen Sattels 2 symmetrisch zu der Umlaufebene des Förderers 1 im Sinne einer Minderung des Abstandes zwischen den Kreismessern 20 steuerbar. An der Außenfläche jedes der letzten liegt eine Überleitführung 22 an, deren Unterkante jeweils auf der Höhe des tiefsten Punktes der Schneiden 21 verläuft. Die Überleitführungen 22 leiten in der Engstellung der Kreismesser 20 zu einem weiteren Trennwerkzeug 23 aus einem Paar Schabemesser 24 über, welches mit pflugartig divergierenden, zu der Förderbahn der Sättel 2 absenkend verlaufenden Schneiden 25 ausgestattet ist. Dabei wird der Verlauf durch eine dachförmige Anordnung der Messerklingen unter gegenüber der des Trennwerkzeuges 12 stärkerer Neigung erreicht. Der Abstand der Ebenen der Schabemesser 24 zueinander entspricht etwa dem größten Abstand der Schneiden 14 des Trennwerkzeuges 12. Als letztes Filetierwerkzeug folgt dem Trennwerkzeug 23 ein Werkzeug 26 aus einem Paar angetriebener und in spitzem Winkel dachförmig zueinander gestellter Kreismesser 27, welche an ihren Innenflächen 29 je mit einer Ausdrehung 30 versehen sind. Die Kreismesser 27 sind auf geeignete Weise während ihrer Arbeitsphase in Abhängigkeit von der Stellung des jeweiligen Sattels 2 symmetrisch zu der Umlaufebene des Förderers 1 im Sinne einer Minderung des Abstandes zwischen den Kreismessern 27 steuerbar. Der Neigungswinkel der Kreismesser 27 ist dem der Flanken 6 des Stützklotzes 3 der Sättel 2 angepaßt und ihre engste Stellung so gewählt, daß ein schmaler Durchgang zwischen den Flanken 6 des Stützklotzes 3 und den Innenflächen 29 der Kreismesser 27 verbleibt. Den letzteren ist ein Paar Führungen 31 vorgeordnet, welche je unter der Kraft einer Feder 32 gegen die Bahn der Sättel 2 eingeschwenkt gehalten, d. h. durch letztere bzw. die darauf aufgesatelten Geflügelkörper verdrängbar sind. Diese Führungen 31 erstrecken sich bis in den unteren Bereich der Innenflächen 29 der Kreismesser 27 und wirken mit ihren Oberkanten bei Anlage an die Innenfläche 29 als Schnittgegenlage. Schließlich ist noch ein Trennwerkzeug 33 aus einem Paar angetriebener Kreismesser vorgesehen, deren Abstand zueinander etwa dem größten Abstand der Schneiden 14 des Trennwerkzeuges 12 entspricht, und deren Schnittiefe bis unmittelbar auf die Ebene der Stützflächen 4 der Sättel 2 heruntergeht.

Die Wirkungsweise der Vorrichtung ist folgende: Ein von seinen Gliedmaßen durch Abtrennen der Flügel- oder Oberarmknochen (humerus) an ihren Körpergelenken 38 und der Beine durch einen das Becken mit den Beinen abtrennenden Querschnitt befreiter und durch Ausschneiden des Rückgrates 41 zum Rücken hin geöffneter Geflügelkörper wird Brustbein 34 oben und Gabelbein 35 voraus auf den Stützklotz 3 eines Sattels 2 aufgesattelt. Dabei wird der Geflügelkörper gegen die Anschlagfahne 5 gedrängt, so daß der Gabelkopf des Gabelbeines 35 an dieser anliegt. Im Verlauf der Förderung setzen nicht gezeigte Führungen zur äußeren Abstützung und Ausrichtung des Geflügelkörpers auf diesem auf. Etwa zur gleichen Zeit wird der Haltestift 7 in dem Stützklotz 3 durch Freigabe eines ebenfalls nicht gezeigten Rückhaltemechanismus durch Federkraft gegen die Innenseite des Brustbeines 34 geschossen, wo sich die Spitze des Haltestiftes 7 in das dort befindliche Sehnengeflecht eingräbt. Unter der so erzeugten formschlüssigen Mitnahme wird der Geflügelkörper dem Trennwerkzeug 8 zugeführt, dessen Kreismesser 9 das Brustfleisch zu beiden Seiten des kammartigen Steges des Brustbeines 34 von diesen lösen. In diese Einschnitte greifen die Führungen 10, deren als Schneiden 11 ausgebildete Unterkanten eine Vertiefung der Schnitte bis auf das Brustbein 34 bewirken. Unter ebenfalls Eintauchen in die genannten Einschnitte übernehmen dann die Schabemesser 13 des Trennwerkzeuges 12 die Führung des Geflügelkörpers und lösen das Brustfleisch von dem Brustbein 34 bis etwa zu dem Ansatz der Rippen 39. Für den Erhalt der Führung sorgen nachfolgend die Führungen 15, welche wiederum in die Freischnitte zu beiden Seiten des kammartigen Steges des Brustbeines 34 greifen und diese Aufgabe während des gesamten weiteren Durchlaufes übernehmen. Die im Bereich der Eintrittsenden 16 der Führungen 15 an deren Flanken befindlichen Abweiser 17 bewirken eine Verdrängung des bisher losgelösten Brustfleisches samt der durch das Trennwerkzeug 8 mitgetrennten Aste 36 des Gabelbeines 35 nach außen. Letztere geraten dabei unter die kufenartigen Führungsteile 18 und werden gleichzeitig in Richtung auf die Stützfläche 4 des Sattels 2 niedergehalten. Auf diese Weise können die in ihrem weitestmögl. Abstand zueinander stehenden Kreismesser 20 des Schneidwerkzeuges 19 im Bereich der Außenkanten der Äste 36 des Gabelbeines 35 einschneiden und diese aus dem Brustfleisch herausschälen. Unmittelbar nach diesem Vorgang werden die Kreismesser 20 im Sinne einer Minderung ihres Abstandes zueinander gesteuert, was bewirkt, daß die freigeschälten Aste 36 des Gabelbeines 35 in Richtung auf die Flanken der Führungen 15 nach innen gedrängt werden und die Kreismesser 20 in den vorgearbeiteten Freischnitten ohne weitere Funktion verlaufen. Dabei leiten die die Kreismesser 20 von außen flankierenden Überleitführungen 22 zu dem Trennwerkzeug 23 über, welches das Loslösen des Brustfleisches von den Rippen 39 im Bereich ihrer Ansätze an dem Brustbein 34 besorgen. Der so vorbereitete Geflügelkörper trifft nun auf das Werkzeug 26. Zuvor haben die Führungen 31 die Flanken des Geflügelkörpers an die Flanken 6 des Stützklotzes 3 des Sattels 2 unter der Kraft der Federn 32 angedrückt. Die Kreismesser 27 des Werkzeuges 26 nehmen bei der Ankunft des Sattels ihre weitestmögliche Stellung ein, so daß ihre Schnittebenen die Körpergelenke 38 der Oberarmknochen zwischen sich einschließen. Unmittelbar nach diesem Übergreifen werden die Kreismesser 27 aufeinander zubewegt, so daß die genannten Körpergelenke 38 in Richtung auf die Flanken der Führungen 15 nach innen gedrängt werden, und die Kreismesser 27 das Filetfleisch mit einem in einer Ebene geführten glatten Schnitt von dem Mittelteil der Rippen abzulösen vermögen, wobei die Körpergelenke 38 in der Ausdrehung 30 an der Innenfläche 29 der Kreismesser 27 Platz finden. Bei diesem Schnitt wirken die Oberkanten der Führungen 31 als Schnittgegenlage und Schnittbegrenzung, was dazu führt, daß die Filets eine saubere Kontur aufweisen. Mittels des Trennwerkzeuges 33 läßt sich das Brustbein 34 aus der verbleibenden Karkasse herauslösen, so daß flache, die Rippen 39 einschließende Körperteile entstehen, die sich für einen nachfolgenden Separierprozeß mittels kontinuierlicher Bandseparatoren problemlos verwenden lassen.

**Patentansprüche**

1. Verfahren zum Gewinnen des Fleisches von den Körpern geschlachteten Geflügels in stückiger Form, vorzugsweise in Form von Filets, durch mechanisches Ablösen in aufeinanderfolgenden, im Bereich des Brustbeines (sternum) (34) beginnenden Arbeitsschritten, dadurch gekennzeichnet, daß mit dem Ablösen des Fleisches von dem Brustbein (34) die Äste (36) des Gabelbeines (35) (claviculae bzw. furcula) getrennt werden, daß die so erzeugten, mit den Körpergelenken (38) der Flügel- oder Oberarmknochen (humerus) (37) verbundenen Teile des Gabelbeines (35) unter Verdrängen derselben zu der Symmetrieebene des Geflügelkörpers hin aus dem Fleisch herausgeschält werden, und daß dann das völlige Abtrennen des Fleisches von dem Geflügelkörper unter Verdrängen der Körpergelenke (38) der Oberarmknochen (37) zu der Symmetrieebene des Geflügelkörpers hin erfolgt.

2. Vorrichtung zur Durchführung des Verfahrens nach Anspruch 1, mit einer Reihe von paarweise angeordneten Trennwerkzeugen (8, 12) Abtrennen des Fleisches von dem Brustbein (34) und den Rippen (39) und einem angetriebenen Förderer (1) mit Sätteln (2), welche die von ihren Gliedmaßen befreiten Geflügelkörper Brustbein-oben unter Abstützung an dessen Innenseite aufnehmen und an den Trennwerkzeugen vorbeiführen, dadurch gekennzeichnet, daß auf die Trennwerkzeuge (8 u. 12) zum Ablösen des Fleisches von dem Brustbein (34) ein Schneidwerkzeug (19) folgt, welches aus einem Paar zu beiden Seiten der Umlaufebene der Sättel (2) angeordneter Kreismesser (20) besteht, welche bezüglich ihres Abstandes zueinander synchron zu der Stellung der Sättel (2) und symmetrisch zu deren Umlaufebene steuerbar sind und mit ihren Schneiden (21) bis in die Nähe der durch die Stützflächen (4) der Sättel (2) bestimmten Förderbahn reichen, und daß als letztes Werkzeug (26) zum Abtrennen des Fleisches von den Rippen ein Paar dachförmig zueinandergestellter und angetriebener Kreismesser (27) vorgesehen ist, welche bezüglich ihres Abstandes zueinander synchron zu der Stellung der Sättel (2) und symmetrisch zu deren Umlaufebene steuerbar sind und mit ihren Schneiden (28) im Bereich neben den Flanken (6) der Sättel wirksam sind.

3. Vorrichtung nach Anspruch 2, dadurch gekennzeichnet, daß den Kreismessern (27) ein Paar gegeneinander gegen die Kraft von Federn (32) beweglicher Führungen (31) vor- und zugeordnet ist, welche in den Ebenen der einander zugekehrten Innenflächen (29) der Kreismesser (27) und sich bis in deren Bereich erstreckend vorgesehen sind, welche den Geflügelkörper im wesentlichen in dem Bereich des zwischen dem Rückgrat (41) und den Hakenfortsätzen (40) befindlichen Teils der Rippen (39) bzw. des darauf aufliegenden Fleisches abgedeckt halten und als Schnittgegenlage für die Kreismesser (27) wirksam sind.

4. Vorrichtung nach Anspruch 2, dadurch gekennzeichnet, daß jedes Kreismesser (27) an seiner Innenfläche (29) eine Ausdrehung (30) aufweist.

5. Vorrichtung nach mindestens einem der Ansprüche 2 und 4, dadurch gekennzeichnet, daß die Kreismesser (27) in bezug auf die Förderebene der Sättel (2) geschränkt angeordnet sind.

6. Vorrichtung nach Anspruch 2, dadurch gekennzeichnet, daß jeder Sattel (2) mit einer Anschlagfahne (5) versehen ist, in deren Nähe dahinter ein Haltestift (7) zur Verankerung des Geflügelkörpers auf dem Sattel (2) angeordnet ist.

7. Vorrichtung nach Anspruch 6, dadurch gekennzeichnet, daß der Haltestift (7) in dem Stützklotz (3) des Sattels (2) gegen die Bewegungsrichtung desselben ansteigend geführt ist und kurz vor dem Wirkbereich des Trennwerkzeuges (8) aus der Stützfläche (4) des Sattels (2) austretend schlagartig in den Geflügelkörper eingesteuert wird.

8. Vorrichtung nach mindestens einem der vorgehenden Ansprüche, dadurch gekennzeichnet, daß dem letzten Werkzeug (26) ein Trennwerkzeug (33) zum Trennen des von den Filets befreiten Geflügelkörpers zu beiden Seiten des Brustbeines nachgeschaltet ist.


**Claims**

1. Process for gaining the meat from the bodies of slaughtered poultry in the form of pieces, preferably in the form of fillets, by mechanical detachment in successive operational steps starting in the region of the breastbone (sternum), characterized in that together with the detaching of the meat from the breastbone (34) the branches (36) of the wishbone (35) (claviculae or furcula) are severed, that the thus produced parts of the wishbone (35) connected to the body joints (38) of the wing or upper-arm bones (humerus) (37) are pared out from the meat whilst displacing the same towards the plane of symmetry of the poultry body and that then the complete severing of the meat from the poultry body takes place whilst displacing the body joints (38) of the upper-armbones (37) towards the plane of symmetry of the poultry body.

2. Apparatus for performing the process according to claim 1, with a series of severing tools (8, 12) arranged in pairs for severing the meat from the breastbone (34) and the ribs, and a driven conveyor (1) with saddles (2), which receive the poultry bodies, from which their extremities have been removed, with the breastbone upwards whilst supporting on the inside thereof and move them past the severing tools, characterized in that following the severing tools (8 and 12) for detaching the meat from the breastbone (34) there is a cutting tool (19), which consists of a pair of circular knives (20) arranged on either side of the rotary plane of the saddles (2), which knives with respect to their spacing from one another are controllable synchronously to the position of the saddles (2) and symmetrically to the rotary plane thereof and extend with their cutting edges (21) into the vicinity of the conveying path defined by the supporting surfaces (4) of the saddles (2) and that as the final tool (26) for severing the meat from the ribs there is provided a pair of driven circular knives (27) arranged in a roof-like manner with respect to each other, which knives with regard to their spacing from one another are controllable synchronously to the position of the saddles (2) and symmetrically to the rotary plane thereof and are effective with their cutting edges (28) in the region beside the flanks (6) of the saddles.

3. Apparatus according to claim 2, characterized in that a pair of guides (31) movable with respect to one another against the force of springs (32) is arranged upstream of and associated with the circular knives (27), which guides are provided in the planes of the circular knives' (27) inner faces (29) facing each other and to extend into the region thereof, and which keep the poultry body covered essentially in the area of the part of the ribs (39) or the meat resting thereon between the backbone (41) and the hook extensions (40) and act as cutting countersupport for the circular knives (27).

4. Apparatus according to claim 2, characterized in that each circular knife (27) is provided with a recess (30) on its inner face (29).

5. Apparatus according to at least one of the claims 2 and 4, characterized in that the circular knives (27) are arranged offset with respect to the conveying plane of the saddles (2).

6. Apparatus according to claim 2, characterized in that each saddle (2) is provided with a stop lug (5), in whose vicinity and behind which a locking pin (7) for anchoring the poultry body on the saddle (2) is arranged.

7. Apparatus according to claim 6, characterized in that the locking pin (7) is guided in the support block (3) of the saddle (2) in a rising manner against the direction of movement thereof and is controlled shortly prior to the effective region of the severing tool (8) to emerge from the supporting surface (4) of the saddle and to move into the poultry body (2) in burst-like manner.

8. Apparatus according to at least one of the preceding claims, characterized in that following the final tool (26) there is provided a severing tool (33) for severing the poultry body, freed from the fillets, on either side of the breastbone.

## Revendications

1. Procédé pour recueillir la viande des parties d'une volaille abattue, sous la forme de morceaux, de préférence sous la forme de filets, grâce à un détachement mécanique exécuté au cours de phases opératoires successives qui commencent dans la zone du bréchet (sternum) (34), caractérisé en ce que, lors du détachement de la viande du bréchet (34), on sépare les branches (36) de la fourchette (35) (claviculae ou furcula), en ce que les parties de la fourchette (35) ainsi obtenues, qui sont reliées aux articulations (38) des os des ailes ou des humérus (humerus) (37), sont détachées de la viande par raclage moyennant un refoulement desdites parties en direction du plan de symétrie du corps de la volaille, et en ce qu'ensuite la séparation complète de la viande du corps de la volaille est réalisée moyennant le refoulement des articulations (38) des humérus (37) en direction du plan de symétrie du corps de la volaille.

2. Dispositif pour la mise en oeuvre du procédé selon la revendication 1, comportant une série d'outils séparateurs (8, 12) disposés par couples et servant à séparer la viande du bréchet (34) et des côtes (39), et un convoyeur entraîné (1) comportant des selles (2), qui reçoivent les corps des volailles, exemptes de leurs membres et disposées en étant soutenues au niveau de leur face intérieure, avec le bréchet tourné vers le haut, et circulent devant les outils séparateurs, caractérisé en ce qu'en aval des outils séparateurs (8 et 12) servant à détacher la viande du bréchet (34) se trouve disposé un outil de coupe (19) qui est formé par un couple de couteaux rotatifs (20) disposés des deux côtés du plan de circulation des selles (2) et dont la distance réciproque peut être commandée en synchronisme avec la position des selles (2) et symétriquement par rapport au plan de circulation de ces dernières, et qui s'étendent, par leurs tranchants (21), jusqu'à proximité de la voie de déplacement déterminée par les surfaces (4) de support des selles (2), et en ce qu'il est prévu, comme dernier outil (26) pour séparer la viande des côtes, un couple de couteaux circulaires entraînés (27), disposés obliquement entre eux en forme de toit et dont la distance réciproque peut être commandée en synchronisme avec la position des selles (2) et symétriquement par rapport au plan de circulation de ces dernières, et qui agissent, par leurs tranchants (28), au voisinage des flancs (6) des selles.

3. Dispositif selon la revendication 2, caractérisé en ce qu'en amont des couteaux circulaires (27) et en association avec ces derniers se trouvent disposés un couple de guides (31) qui sont déplaçables l'un par rapport à l'autre à l'encontre de la force de ressorts (32), sont disposés dans les plans des surfaces intérieures (29), qui se font face, des couteaux circulaires (27) et s'étendent jusqu'au voisinage de ces derniers et laissent à découvert le corps de la volaille sensiblement dans la zone de la partie des côtes (39) située entre la colonne vertébrale (41) et les appendices crochus (40), ou dans la zone de la viande recouvrant les côtes et agissent en tant que supports antagonistes de coupe pour les couteaux circulaires (27).

4. Dispositif selon la revendication 2, caractérisé en ce que chaque couteau circulaire (27) comporte une partie évidée au tour (30) au niveau de sa surface intérieure (29).

5. Dispositif selon au moins l'une des revendications 2 et 4, caractérisé en ce que les couteaux circulaires (27) sont disposés obliquement par rapport au plan d'entraînement des selles (2).

6. Dispositif selon la revendication 2, caractérisé en ce que chaque selle (2) est munie d'une languette de butée, à proximité et en arrière de laquelle une tige de retenue (7) servant à l'accrochage du corps de la volaille est disposée sur la selle (2).

7. Dispositif selon la revendication 6, caractérisé en ce que la tige de retenue (7) est guidée dans une position oblique montante dans la direction de déplacement de la selle (2), dans le bloc de support (3) de cette dernière et est insérée brusquement dans le corps de la volaille en sortant de la surface de support (4) de la selle (2), peu avant la zone d'action de l'outil séparateur (8).

8. Dispositif selon l'une des revendications précédentes, caractérisé en ce qu'en aval du dernier outil (26) se trouve installé un outil séparateur (33) servant à séparer le corps de la volaille, dont les filets ont été retirés, des deux côtés du bréchet.

0 183 986

Fig. 1

Fig. 3

Fig. 2

Fig. 4

1